# EUROPEAN PATENT APPLICATION

(11) **EP 4 721 947 A1**
(43) Date of publication of application: **08.04.2026**
(21) Application number: 24848658.1
(22) Date of filing: 29.05.2024
(51) Int. Cl.: B29C 43/18, B29C 70/68

(54) **METAL-RESIN COMPOSITE BODY AND METHOD FOR PRODUCING SAME**

(30) Priority: 28.07.2023 JP 2023123687
(71) Applicant: KABUSHIKI KAISHA KOBE SEIKO SHO (KOBE STEEL, LTD.), Hyogo 651-8585 (JP)
(72) Inventor: WATANABE, Kenichi, Kobe-shi, Hyogo 651-2271 (JP); KASHIMA, Hiroko, Kobe-shi, Hyogo 651-2271 (JP); SEKIGUCHI, Shu, Kobe-shi, Hyogo 651-2271 (JP)
(74) Representative: TBK
(86) International application number: PCT/JP2024/019628
(87) International publication number: WO 2025/027997

(57) **Abstract**

An extruded material (20) comprises: a first side wall (21) that forms an exposure surface (21a) in which a metal is exposed and that, in an accommodated state in which the extruded material (20) is accommodated in an accommodation part (92) of a first mold (91), is to closely face a first inner side surface (92a) of the accommodation part (92); a second side wall (22) that forms a covered surface (22a) which is covered with a resin material (50) and that defines, together with a second inner side surface (92b) of the accommodation part (92), a cavity (90a) which is filled with the resin material (50); and a hook part (29) that protrudes from a mold opening direction-side end part of the first side wall (21) and that is locked to the first mold (10) in the accommodated state.

## Description

### TECHNICAL FIELD

The present disclosure relates to a metal-resin composite and a method for manufacturing the metal-resin composite.

### BACKGROUND ART

Various structures and manufacturing methods have been proposed for metal-resin composites applied to structural components such as vehicle frames. For example, in the composite disclosed in Patent Document 1, a thermosetting carbon fiber-reinforced plastic (CFRP) is bonded to a surface of an aluminum extruded material with an adhesive. In the composite disclosed in Patent Document 2, a CFRP is hot-pressed onto an aluminum plate to integrate the aluminum plate and the CFRP.

### PRIOR ART DOCUMENTS

### PATENT DOCUMENTS

Patent Document 1: JP-A-2017-119422
Patent Document 2: JP-A-2020-104411

### SUMMARY OF THE INVENTION

### PROBLEMS TO BE SOLVED BY THE INVENTION

When the hot pressing exemplified in Patent Document 2 is applied to the manufacture of a composite containing an aluminum extruded material, the mold should be prepared to provide a corresponding clearance between the mold and the aluminum extruded material assumed to have a reference dimension in consideration of tolerance of the aluminum extruded material. As a result, the aluminum extruded material molded within the tolerance can be appropriately placed in the mold each time one composite is manufactured. Meanwhile, the aluminum extruded material is extruded hot as taught in Patent Document 1. Therefore, twisting and bending are likely to occur during the extrusion, and it is difficult to increase the dimensional accuracy of the aluminum extruded material.

In view of the low dimensional accuracy of the aluminum extruded material, the clearance between the mold and the aluminum extruded material should be made substantially larger than a clearance between mating surfaces of the mold. Then, during the hot pressing, the orientation of the aluminum extruded material is not stable with respect to the mold, and the resin material may flow into a clearance unintentionally formed.

An object of the present disclosure is to suppress an unintended flow of a resin material into a clearance between a mold and an extruded material in manufacturing a metal-resin composite by press-molding the resin material onto the extruded material.

### SOLUTIONS TO THE PROBLEMS

An aspect of the present disclosure provides a method for manufacturing a metal-resin composite in which a resin material is integrated with an extruded material made of metal by press molding, the method including: preparing a mold including a first mold that forms a housing portion that houses at least a portion of the extruded material, and a second mold movable in a mold closing direction and a mold opening direction with respect to the first mold; housing the extruded material in the housing portion and disposing the resin material in the first mold; and moving the second mold in the mold closing direction to form a cavity defined by the extruded material and the mold, and pressurizing the resin material to fill the resin material into the cavity, wherein the extruded material includes a first side wall that forms an exposed surface on which the metal is exposed, and that is to closely face a first inner side surface of the housing portion in a housing state where the extruded material is housed in the housing portion, a second side wall that forms a covered surface covered with the resin material and defines the cavity together with a second inner side surface of the housing portion in the housing state, and a hook that protrudes from an end portion of the first side wall in the mold opening direction and is locked to the first mold in the housing state.

According to the above-described configuration, when the resin material is pressurized, a molding pressure acts on the extruded material via the resin material. By locking the hook to the first mold, the extruded material can maintain an orientation in which the exposed surface of the first side wall is close to the first inner side surface of the housing portion. That is, while the cavity is filled with the resin material, a clearance between the first side wall and the first inner side surface can be kept closed. Since the resin material is prevented from solidifying on the exposed surface and the metal is appropriately exposed on the exposed surface, work of peeling off an excess resin after the mold release can be omitted or greatly simplified. On the other hand, a clearance is formed between the covered surface and the second inner side surface, and this clearance functions as a cavity for intentionally pouring the resin material with which the covered surface is to be covered. The resin material is appropriately solidified on the covered surface, and the second side wall is appropriately covered with the resin material.

The first mold may form a groove defined by an end portion of an outer surface of the hook and constituting a part of the cavity.

According to the above-described configuration, the resin material can be thickly disposed around the hook, and the resin material is hardly peeled off from the extruded material.

The extruded material and the resin material may constitute a fitting structure at an end portion of the second side wall in the mold closing direction.

According to the above-described configuration, the resin material is solidified in a state of being fitted to the extruded material at the end portion of the second side wall, and the resin material is hardly peeled off from the extruded material.

The extruded material may further include an outer connection wall that connects end portions of the first side wall and the second side wall in the mold opening direction in the housing state, and a projection that protrudes with respect to the covered surface at a corner portion between the outer connection wall and the second side wall.

According to the above-described configuration, the resin material is solidified around the projection, so that the resin material is hardly peeled off from the extruded material.

Another aspect of the present disclosure provides a metal-resin composite obtained by integrating a resin material with an extruded material made of metal by press molding, wherein the extruded material includes a first side wall that forms an exposed surface on which the metal is exposed, a second side wall that forms a covered surface covered with the resin material, and a hook that protrudes from an end portion of the exposed surface of the first side wall.

According to the above-described configuration, the first side wall of the extruded material can be brought into close contact with a mold used for press molding using the hook protruding from the end portion of the exposed surface. Therefore, it is possible to prevent the resin material from solidifying on the exposed surface on which the metal is to be exposed, and it is possible to appropriately solidify the resin material on the covered surface to be covered with the resin material. It is possible to provide a metal-resin composite that is manufactured with high production efficiency.

### EFFECTS OF THE INVENTION

According to the present disclosure, it is possible to suppress an unintended flow of a resin material into a clearance between a mold and an extruded material in manufacturing a metal-resin composite by press-molding the resin material onto the extruded material.

### BRIEF DESCRIPTION OF THE DRAWINGS

[Fig. 1] Fig. 1 is a side view of an electric automobile.
[Fig. 2] Fig. 2 is a perspective view of an automobile battery case as an application example of a metal-resin composite according to a first embodiment.
[Fig. 3] Fig. 3 is a perspective view of the automobile battery case taken along line III-III of Fig. 2.
[Fig. 4] Fig. 4 is a cross-sectional perspective view showing an extruded material, a mold, and a nest prepared in the manufacture of a metal-resin composite.
[Fig. 5] Fig. 5 is a front view of the extruded material.
[Fig. 6] Fig. 6 is a cross-sectional view showing the extruded material and the mold in a state where a resin material is placed.
[Fig. 7] Fig. 7 is a cross-sectional view showing the extruded material and the mold in a state where the resin material is hot-pressed.
[Fig. 8] Fig. 8 is a perspective cross-sectional view showing the extruded material and the mold after the completion of the hot pressing.
[Fig. 9] Fig. 9 is a diagram corresponding to Fig. 3 of a second embodiment.
[Fig. 10] Fig. 10 is a diagram corresponding to Fig. 5 of the second embodiment.
[Fig. 11] Fig. 11 is a diagram corresponding to Fig. 6 of the second embodiment.
[Fig. 12] Fig. 12 is a diagram corresponding to Fig. 8 of the second embodiment.

### DETAILED DESCRIPTION

Hereinafter, embodiments will be described with reference to the drawings. The same or corresponding elements are denoted by the same symbols, and redundant detailed description will be omitted.

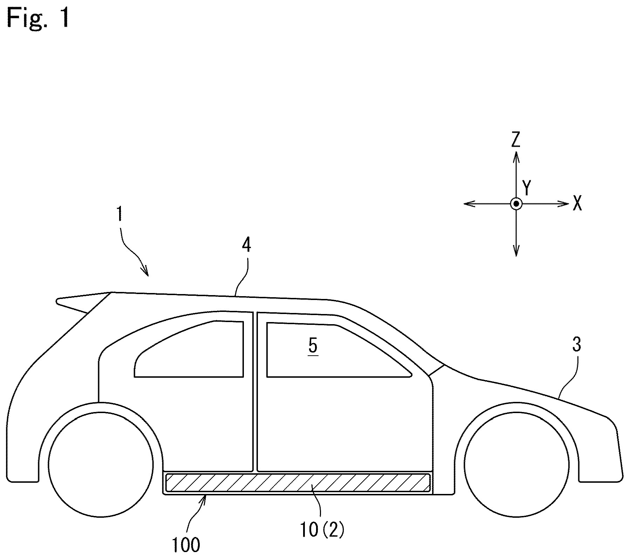

Referring to Fig. 1, an automobile 1 is an electric vehicle that travels by driving a motor with electric power supplied from a battery 2. The automobile 1 is a vehicle that travels on electric power, and may be, for example, an electric automobile or a plug-in hybrid vehicle. The type of the vehicle is not particularly limited, and the vehicle may be a passenger car, a truck, a work vehicle, another mobility vehicle, or the like. Hereinafter, the electric vehicle will be described using a passenger type electric automobile as an example.

The automobile 1 includes a motor, a high-voltage device, and the like (not shown) mounted on a vehicle front portion 3. In addition, the automobile 1 includes an automobile battery case 10 in which the battery 2 is housed substantially entirely under a floor of a vehicle interior 5 of a vehicle body central portion 4.

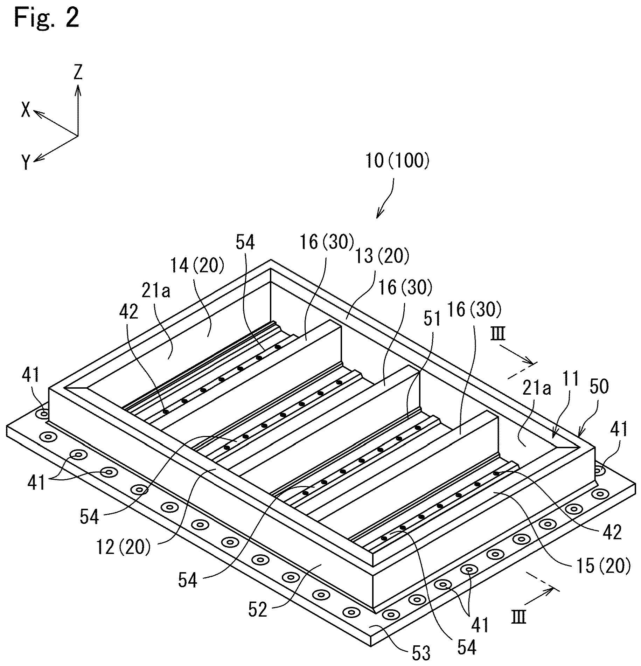

In Fig. 1, a front-rear direction (vehicle length direction) of the automobile 1 is indicated by an X direction, and a vertical direction (vehicle height direction) is indicated by a Z direction. The same notation is used in the subsequent drawings, and a width direction (vehicle width direction) of the automobile 1 is indicated by a Y direction in Fig. 2 and the subsequent drawings.

Referring to Fig. 2, the battery case 10 includes a frame 11 in which a plurality of extruded materials 20 and 30 are arranged in a frame shape, and a resin material 50 integrally molded with the frame 11.

The battery case 10 is one of preferred application examples of a metal-resin composite 100 according to an embodiment. The metal-resin composite 100 is formed by integrating the resin material 50 with the extruded materials 20 and 30 made of metal by press molding. The metal material of the extruded materials 20 and 30 is not particularly limited. Light alloys such as aluminum alloys and magnesium alloys are preferable examples of the metal material, and contribute to both weight reduction and high rigidity of structural components. Unless otherwise specified below, the extruded materials 20 and 30 are made of an aluminum alloy.

Although not shown in detail, the extruded material 20 is obtained by heating and compressing a billet-shaped metal material in a main body of an extruder and extruding the billet-shaped metal material from a die attached to the main body. After the extrusion from the die, required processing such as cooling, removal, and cutting is executed. Since the cross section of the extruded material 20 is defined by the shape of the die, the cross section is uniform in the extending direction (extrusion direction) of the extruded material 20. However, twisting and bending occur due to hot molding. Elements of the extruded material 20 extend in the extending direction and are seamlessly integrated with each other. The same applies to the extruded material 30.

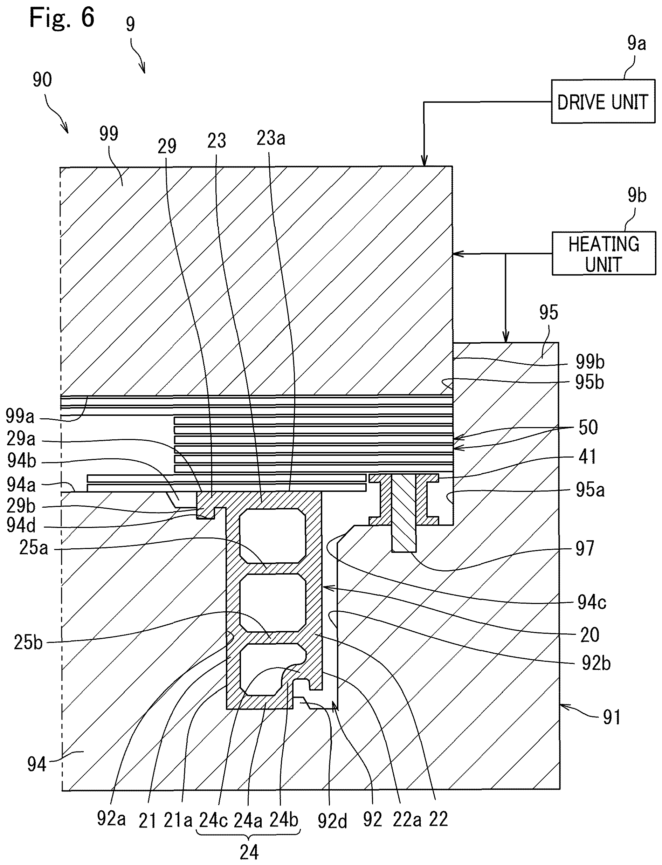

The resin material 50 is obtained by press-molding a compound in a manufacturing device 9 (see Fig. 6) for manufacturing the metal-resin composite 100. The compound may be a sheet molding compound (SMC) formed in a sheet shape or a bulk molding compound (BMC) formed in a bulk shape. The SMC or the BMC is obtained by impregnating fibers in a matrix resin to form a fiber reinforced plastic (FRP). The matrix resin contains a thermosetting resin such as an unsaturated polyester as a main component, and an additive is mixed into the main component. The additive includes, for example, a mold release agent. The fibers are, for example, glass fibers or carbon fibers, which are cut short and directed in a random direction in the compound. However, the resin material 50 is not limited to a thermosetting resin, and may be a thermoplastic resin. Hereinafter, as a mere example, the resin material 50 is made of the SMC.

As an example, the frame 11 has a rectangular frame shape in plan view. The frame 11 includes a pair of side members 12 and 13, a front member 14, a rear member 15, and a plurality of cross members 16. The pair of side members 12 and 13 extends in the vehicle length direction. The front member 14 connects front ends of the pair of side members 12 and 13 in the vehicle width direction. The rear member 15 connects rear ends of the pair of side members 12 and 13 in the vehicle width direction. The plurality of cross members 16 are spaced apart from each other between the front member 14 and the rear member 15, and connect the pair of side members 12 and 13 in the vehicle width direction.

In the present embodiment, the pair of side members 12 and 13, the front member 14, and the rear member 15 are made of the extruded material 20. The cross members 16 are made of the extruded material 30. An extending direction of each of the members constituting the frame 11 corresponds to an extrusion direction at the time of molding the extruded material constituting the member. The extruded material 20 and the extruded material 30 have cross-sectional shapes different from each other.

End portions of two adjacent members among the pair of side members 12 and 13, the front member 14, and the rear member 15 are cut at 45 degrees (so-called 45-degree angle cutting) and butted against each other. Both end surfaces of each of the cross members abut on or are close to inner side surfaces of the pair of side members 12 and 13, respectively.

The plurality of extruded materials (that is, the plurality of members constituting the frame 11) are connected to each other with the resin material 50 interposed therebetween. However, among pairs of two adjacent members, there may be a pair welded to each other, or a pair fastened to each other via a bracket in a portion where the two members are butted against each other. Conversely, some pairs of two adjacent members that are not connected to each other by welding or fastening are present. By eliminating welding and fastening as much as possible, the number of steps of manufacturing the battery case 10 can be reduced.

The resin material 50 has a bottom wall 51, a peripheral wall 52, and a flange wall 53. The bottom wall 51 is disposed below the frame 11 and is embedded in a lower surface of the frame 11. Lower ends of the pair of side members 12 and 13, the front member 14, the rear member 15, and the plurality of cross members 16 are connected to each other via the bottom wall 51. The peripheral wall 52 is circumferentially disposed on the outer side of the frame 11 in a horizontal direction and is embedded in an outer side surface of the frame 11. A lower end of the peripheral wall 52 is continuous with the bottom wall 51. Adjacent two of the pair of side members 12 and 13, the front member 14, and the rear member 15 are connected to each other via the peripheral wall 52. The flange wall 53 extends outward in the horizontal direction from the peripheral wall 52.

A metallic joining member 41 having a joining structure with another member (for example, a vehicle body frame such as a side sill) is embedded in the flange wall 53. The resin material 50 has a plurality of ridge portions 54 protruding upward from the bottom wall 51. One ridge portion 54 extends in the vehicle width direction in one region formed between two adjacent members among the front member 14, the plurality of cross members 16, and the rear member 15. A metallic joining member 42 having a joining structure with the battery 2 (see Fig. 1) is embedded in each of the ridge portions 54. The joining member 41 is, for example, a sleeve, and the joining member 42 is, for example, a metallic nut.

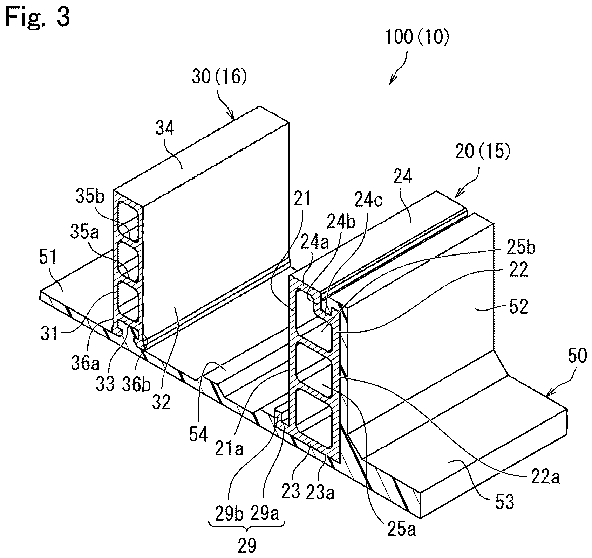

Referring to Fig. 3, the extruded material 20 has a substantially rectangular cross-section. The same applies to the extruded material 30. The extruded material 20 has a first side wall 21, a second side wall 22, a first outer connection wall 23, a second outer connection wall 24, and one or a plurality of inner connection walls 25a and 25b. The extruded material 30 has a first side wall 31, a second side wall 32, a first outer connection wall 33, a second outer connection wall 34, one or a plurality of inner connection walls 35a and 35b, and a pair of extension side walls 36a and 36b.

In the present embodiment, the orientations of the extruded materials 20 and 30 and the resin material 50 during the use of the battery case 10 are upside down compared with those during the manufacture of the battery case 10. During the use of the battery case 10, the first outer connection walls 23 and 33 are positioned on the lower side in the vehicle height direction. The bottom wall 51 of the resin material 50 is embedded in the outer surfaces of the first outer connection walls 23 and 33 as the lower surface of the frame 11. The second outer connection walls 24 and 34 are positioned on the upper side in the vehicle height direction.

During the use of the metal-resin composite 100 as the battery case 10, the first outer connection walls 23 and 33 are bottom walls of the extruded materials 20 and 30, and the second outer connection walls 24 and 34 are top walls of the extruded materials 20 and 30. In this case, with reference to Fig. 3, the configurations of the extruded materials 20 and 30 will be described according to the orientation of the battery case 10 during the use of the battery case 10.

The first side wall 21 of the extruded material 20 extends upward from a side edge of the first outer connection wall 23 on one side in the width direction of the first outer connection wall 23. The second side wall 22 of the extruded material 20 extends upward from a side edge of the first outer connection wall 23 on the other side in the width direction of the first outer connection wall 23.

The width direction of the first outer connection wall 23 corresponds to the width direction of the extruded material 20. The width direction of the extruded material 20 is orthogonal to both the extrusion direction and the height direction of the extruded material 20. In a case where the extruded material 20 constitutes the side members 12 and 13, the width direction of the extruded material 20 corresponds to the vehicle width direction. In a case where the extruded material 20 constitutes the front member 14 or the rear member 15, the width direction of the extruded material 20 corresponds to the vehicle length direction. The one side in the width direction of the first outer connection wall 23 corresponds to the inside of the battery case 10 in the horizontal direction, and the other side in the width direction corresponds to the outside of the battery case 10 in the horizontal direction.

An outer side surface of the first side wall 21 constitutes an inner side surface of the frame 11 in the horizontal direction. The resin material 50 is not embedded in or not covered with the inner side surface of the frame 11 (the outer side surface of the first side wall 21 of the extruded material 20). The outer side surface of the second side wall 22 constitutes an outer side surface of the frame 11 in the horizontal direction. The resin material 50 is embedded in the outer side surface of the frame 11. The outer side surface of the first side wall 21 is not covered with the resin material 50. Therefore, at least immediately after the mold release, the outer side surface of the first side wall 21 is an "exposed surface 21a" on which the aluminum alloy as the material of the extruded material 20 is to be purely exposed. The outer side surface of the second side wall 22 is a "covered surface 22a" that is covered with the resin material 50 and in which the peripheral wall 52 is embedded. Furthermore, the outer surface 23a of the first outer connection wall 23 is also a "covered surface" that is covered with the resin material 50 and in which the bottom wall 51 is embedded.

The second outer connection wall 24 of the extruded material 20 connects upper ends of the first side wall 21 and the second side wall 22 to each other in the width direction of the extruded material 20. In the present embodiment, the extruded material 20 has the two inner connection walls 25a and 25b. The two inner connection walls 25a and 25b are spaced apart from each other in the vertical direction in a hollow space surrounded by the first side wall 21, the second side wall 22, the first outer connection wall 23, and the second outer connection wall 24. The inner connection walls 25a and 25b connect inner side surfaces of the first side wall 21 and the second side wall 22 to each other in the width direction of the extruded material 20.

The number of inner connection walls 35a and 35b of the extruded material 30 is also two. The first side wall 31, the second side wall 32, the first outer connection wall 33, the second outer connection wall 34, and the two inner connection walls 35a and 35b of the extruded material 30 are similar to those of the extruded material 20. The extruded material 30 is disposed inside a case surrounded by the pair of side members 12 and 13, the front member 14, and the rear member 15. Both the outer side surface of the first side wall 31 and the outer side surface of the second side wall 32 are "exposed surfaces" in which the peripheral wall 52 is not embedded. The pair of extension side walls 36a and 36b extends from the first side wall 31 and the second side wall 32, respectively, and protrudes downward with respect to the first outer connection wall 33. The resin material 50 is embedded in a region surrounded by the pair of extension side walls 36a and 36b and the first outer connection wall 33. This increases the joint strength between the resin material 50 and the extruded material 30. An outer surface of the first outer connection wall 33 and inner side surfaces of the pair of extension side walls 36a and 36b are covered with the resin material 50, and are "covered surfaces" in which the bottom wall 51 is embedded.

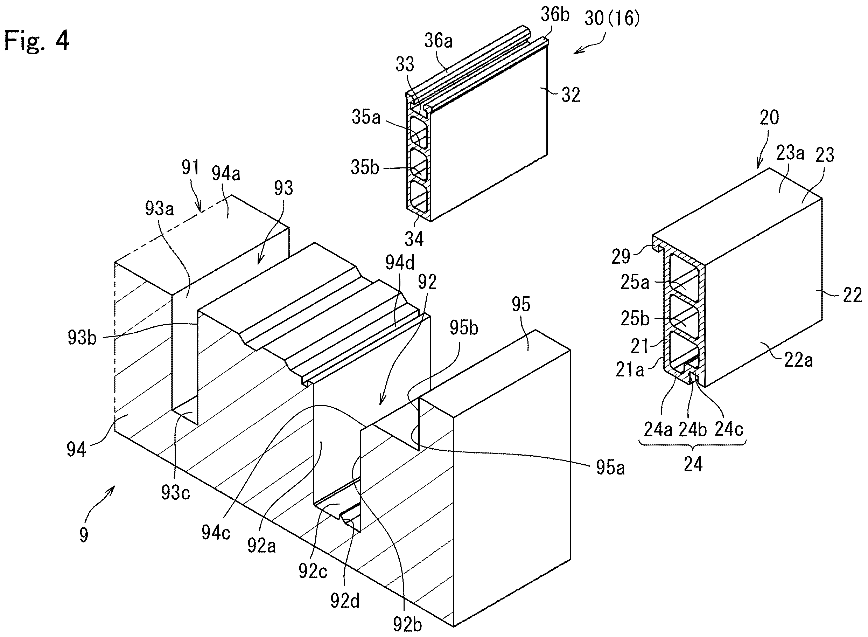

Referring to Fig. 4, in a method for manufacturing the metal-resin composite 100 as the battery case 10, the resin material 50 is integrated with the extruded materials 20 and 30 by press molding using a mold 90. The vertical direction corresponds to a mold opening/closing direction of the mold 90. In the manufacturing device 9 for manufacturing the metal-resin composite 100, a mold opening direction is upward, and a mold closing direction is downward. The extruded material 20 is disposed in an orientation in which the first outer connection wall 23 is positioned above the manufacturing device 9 and the second outer connection wall 24 is positioned below the manufacturing device 9. The same applies to the extruded material 30.

During the manufacture of the metal-resin composite 100 as the battery case 10, the first outer connection walls 23 and 33 are the top walls of the extruded materials 20 and 30, and the second outer connection walls 24 and 34 are the bottom walls of the extruded materials 20 and 30, contrary to the case of use. Here, with reference to Fig. 4, the extruded materials 20 and 30 and other configurations will be described according to the orientation during the manufacture of the metal-resin composite 100.

The manufacturing device 9 mainly includes the mold 90, a drive unit 9a, and a heating unit 9b. The mold 90 includes a first mold 91 and a second mold 99 (see Fig. 6). The first mold 91 is configured as a fixed mold, a lower mold, or a die. The second mold 99 is configured as a movable mold, an upper mold, or a punch. The second mold 99 is driven by the drive unit 9a and is movable in the mold closing direction and the mold opening direction with respect to the first mold 91.

The first mold 91 forms a housing portion 92 that houses at least a portion of the extruded material 20, and a housing portion 93 that houses at least a portion of the extruded material 30.

The first mold 91 has a base 94 and a shoulder portion 95. An upper surface of the base 94 forms a horizontal lower molding surface 94a. The shoulder portion 95 protrudes upward from a peripheral edge portion of the base 94, and an inner side surface of the shoulder portion 95 extends upward from the lower molding surface 94a.

Although not shown in detail, the inner side surface of the shoulder portion 95 is equivalent to a plan view shape of a combination of the bottom wall 51 and the flange wall 53 of the metal-resin composite 100 as a finished product in a cross section orthogonal to the mold opening/closing direction. In the present example, as can be seen from Fig. 2, since the plan view shape of the combination is rectangular, the shoulder portion 95 has a rectangular window frame shape in plan view. A lower portion of the inner side surface of the shoulder portion 95 forms a vertical side molding surface 95a. The shape of the side molding surface 95a is transferred as a peripheral surface of the flange wall 53. An upper portion of the inner side surface of the shoulder portion 95 forms a lower mating surface 95b.

The housing portion 92 and the housing portion 93 are recessed in the lower molding surface 94a. The housing portion 92 has an inner surface having a U-shaped cross section and is configured as a groove opened to the lower molding surface 94a. An inner surface of the housing portion 92 includes a pair of a first inner side surface 92a and a second inner side surface 92b that extend downward and are continuous with the lower molding surface 94a, and an inner bottom surface 92c connecting lower ends of the first inner side surface 92a and the second inner side surface 92b. The same applies to the housing portion 93. An inner surface of the housing portion 93 includes a pair of inner side surfaces 93a and 93b and an inner bottom surface 93c. A groove 94b is formed in an upper edge of the housing portion 92 on one side in the width direction of the housing portion 92. In the base 94, a slit 94d is formed by recessing an inner bottom surface of the groove 94b in the mold opening direction.

A configuration and operation of the manufacturing device 9 will be described according to a procedure of the method for manufacturing the metal-resin composite 100. In the manufacture of the metal-resin composite 100, first, the mold 90 is prepared. Next, the extruded materials 20 and 30 are housed in the housing portions 92 and 93 of the prepared first mold 91.

Regarding the preparation of the mold 90, the second mold 99 is positioned at a predetermined retraction position away from the first mold 91 in the mold opening direction.

Although detailed illustration of the housing of the extruded material 30 in the housing portion 93 is omitted, referring to Fig. 4, the extruded material 30 is inserted into the housing portion 93 from above in an orientation in which the pair of extension side walls 36a and 36b protrudes upward with respect to the first outer connection wall 33. The second outer connection wall 34 abuts on the inner bottom surface 93c of the housing portion 93, the first side wall 31 is close to the inner side surface 93a, and the second side wall 32 is close to the inner side surface 93b. A pair of projections disposed at distal ends of the extension side walls 36a and 36b are in close contact with the pair of inner side surfaces 93a and 93b, respectively. Since the cross-sectional shape of the extruded material 30 is line-symmetric with respect to a center line extending in the vertical direction through the center in the width direction, the first side wall 31 may closely face the inner side surface 93b, and the second side wall 32 may closely face the inner side surface 93a.

Regarding the housing of the extruded material 20 in the housing portion 92, referring to Fig. 4, the extruded material 20 is inserted into the housing portion 92 from above in an orientation in which the first outer connection wall 23 faces upward. The second outer connection wall 34 abuts on the inner bottom surface 92c of the housing portion 92, the first side wall 21 is close to the first inner side surface 92a, and the second side wall 22 is close to the second inner side surface 92b.

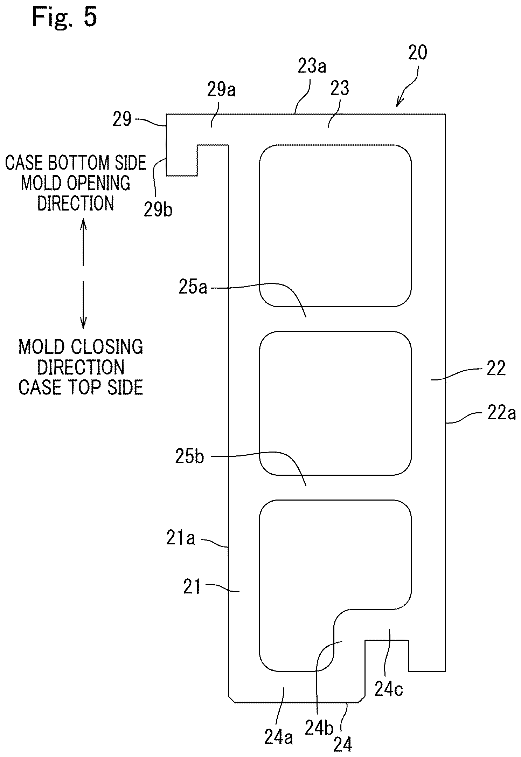

The shape of the extruded material 20 will be described in more detail with reference to Figs. 4 and 5. Note that the vertical direction in Fig. 4 and Fig. 5 corresponds to the vertical direction during the manufacture, and the first outer connection wall 23 faces upward.

In the present embodiment, as a mere example, the first outer connection wall 23, the second outer connection wall 24, and the inner connection walls 25a and 25b are parallel to each other. The first side wall 21 and the second side wall 22 are orthogonal to the first outer connection wall 23 and are parallel to each other. However, these walls may have any shape that does not affect the mold release after molding, and are not necessarily parallel or vertical.

A hook 29 is disposed at an end portion of the first side wall 21 in the mold opening direction, in other words, at a corner portion between the first outer connection wall 23 and the first side wall 21. The hook 29 protrudes from the end portion of the first side wall 21. The hook 29 has an L-shaped cross section and has a protrusion 29a and a bent portion 29b. The protrusion 29a protrudes from an end portion of the exposed surface 21a of the first side wall 21 to the one side in the width direction. In other words, the protrusion 29a is formed by extending the first outer connection wall 23 to the one side in the width direction with respect to the first side wall 21. The bent portion 29b protrudes from the tip of the protrusion 29a and is bent toward the mold closing direction.

An end portion of the second side wall 22 in the mold closing direction, in other words, a corner portion between the second outer connection wall 24 and the second side wall 22 has a complicated uneven shape. The second outer connection wall 24 is recessed upward on the other side in the width direction. The second outer connection wall 24 includes a base portion 24a on the one side in the width direction, an offset portion 24c offset in the mold opening direction (upper side during the manufacture) with respect to the base portion 24a on the other side in the width direction, and a step portion 24b connecting the base portion 24a and the offset portion 24c in the mold opening/closing direction (vertical direction) at a center portion in the width direction. A lower end of the second side wall 22 protrudes toward the mold closing direction (the lower side during the manufacture) with respect to the offset portion 24c. As a result, a lower end portion of the second side wall 22, the offset portion 24c, and the step portion 24b form an uneven shape. The lower end of the second side wall 22 is located in the mold opening direction (the upper side during the manufacture) with respect to an outer surface of the base portion 24a, and does not interfere with the inner surface of the housing portion 92.

Referring to Fig. 6, when the extruded material 20 is inserted into the housing portion 92, the bent portion 29b of the hook 29 is inserted into the slit 94d from above. A lower surface or an inner surface (that is, the surface in the mold closing direction) of the protrusion 29a of the hook 29 is supported by the inner bottom surface of the groove 94b. The hook 29 is disposed on the other side in the width direction of the groove 94b. A tip surface of the hook 29 faces the inside of the groove 94b. A remaining portion of the groove 94b in which the hook 29 is not disposed is defined by an end surface of the hook 29 on the other side in the width direction, but is still open on the upper side (in the mold opening direction).

On the inner bottom surface 92c of the housing portion 92, a ridge 92d protrudes toward the mold opening direction (on the upper side during the manufacture). When the extruded material 20 is housed in the housing portion 92, the base portion 24a abuts on the inner bottom surface 92c on the first inner side surface 92a side with respect to the ridge 92d, and the step portion 24b is locked to the ridge 92d.

The outer side surface (exposed surface 21a) of the first side wall 21 is in surface contact with or closely faces the first inner side surface 92a of the housing portion 92 constituted by the base 94. The first inner side surface 92a extends vertically from the inner bottom surface 92c, that is, in the mold opening/closing direction.

The outer side surface (covered surface 22a) of the second side wall 22 is spaced apart from the second inner side surface 92b. The second inner side surface 92b extends in the same manner as the first inner side surface 92a, that is, in the mold opening/closing direction.

The step portion 24b is higher than the ridge 92d. That is, the offset portion 24c of the second outer connection wall 24 is located in the mold opening direction with respect to a protruding end surface of the ridge 92d. The lower end portion of the second side wall 22 is located closer to the second inner side surface 92b than the ridge 92d while forming a space together with the second inner side surface 92b and being separated from the second inner side surface 92b. The lower end of the second side wall 22 faces a portion of the inner bottom surface 92c closer to the second inner side surface 92b than the ridge 92d in the mold opening/closing direction. As described above, the space between the outer side surface (covered surface 22a) of the second side wall 22 and the second inner side surface 92b communicates with a clearance between the lower end portion of the second side wall 22 and the inner bottom surface 92c and a clearance between the offset portion 24c and the ridge 92d, and constitutes a maze-like space as a whole.

An upper edge of the second inner side surface 92b is lower than an upper edge of the first inner side surface 92a. An end portion of the second inner side surface 92b in the mold opening direction is continuous with an outer peripheral edge portion of the lower molding surface 94a of the base 94 via the tapered surface 94c. A cylindrical nest 97 is erected on the outer peripheral edge portion of the lower molding surface 94a. A metal nut serving as the joining member 41 is fitted to the outside thereof (the nut may be threaded or not threaded). Although not shown in detail, a cylindrical nest and the joining member 42 are similarly disposed on the lower molding surface 94a on the further left side of a cutting line on the left side of the drawing of Fig. 6.

In this manner, the second inner side surface 92b is relatively low, and the tapered surface 94c is disposed. As a result, the space between the outer side surface (covered surface 22a) of the second side wall 22 and the second inner side surface 92b is widely opened toward the mold opening direction through a clearance between the tapered surface 94c and the extruded material 20.

Next, the mold 90 is preheated by the heating unit 9b, and the temperature of the mold 90 is raised to a predetermined temperature. Then, the compound of the resin material 50 is placed in the first mold 91. In the first mold 91, the extruded material 20 and the joining member 41 (further, the extruded material 30 and the joining member 42 (see Fig. 2), although not shown in detail) are placed. The compound covers them from above.

The compound is, for example, the SMC. A plurality of sheet-like compounds are laminated in a space surrounded by the shoulder portion 95. In the present embodiment, for molding the peripheral wall 52 and the flange wall 53 of the resin material 50, a large amount of resin is required around the housing portion 92 as compared with, for example, the central region of the lower molding surface 94a. Therefore, the number of layers of the compound to be laminated is greater in the periphery of the housing portion 92 than in other portions.

The cylindrical nest 97, the extruded materials 20 and 30, the joining members 41 and 42, and the compound of the resin material 50 described above may be manually placed. The manufacturing device 9 may include a manipulator that performs a part or all of the placement work.

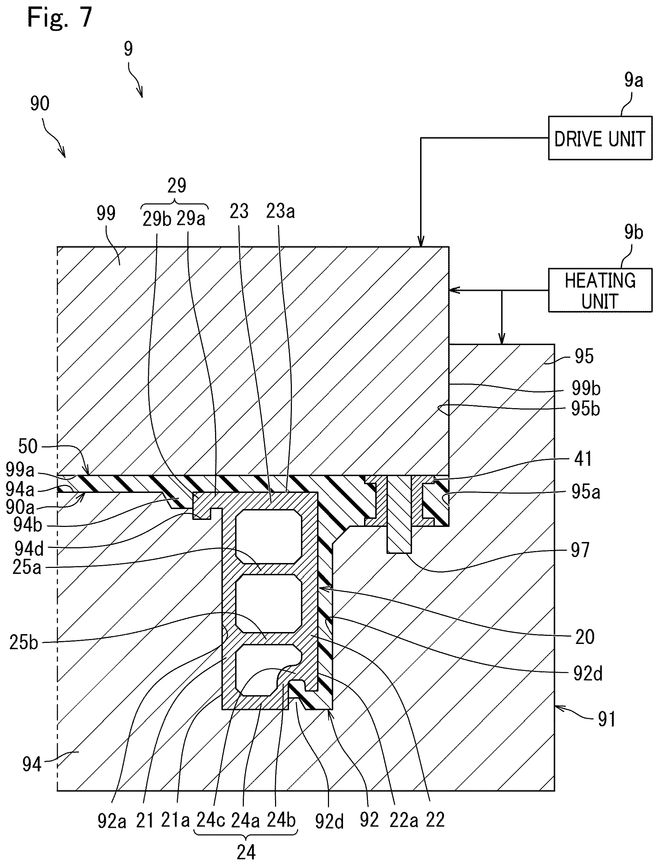

Next, referring to Fig. 7, the drive unit 9a moves the second mold 99 from the retraction position to the bottom dead center in the mold closing direction. As a simple example, the second mold 99 has a rectangular parallelepiped shape. A lower surface of the second mold 99 constitutes an upper molding surface 99a facing the lower molding surface 94a of the first mold 91 in the mold opening/closing direction. A side surface of the second mold 99 forms an upper mating surface 99b extending upward from a peripheral edge of the upper molding surface 99a. The upper mating surface 99b is similar to the inner side surface of the shoulder portion 95 of the first mold 91 in a cross section orthogonal to the mold opening/closing direction, and is extremely slightly smaller than the inner side surface of the shoulder portion 95.

In the process of a downward movement of the second mold 99, the second mold 99 is internally fitted to the shoulder portion 95, and the upper mating surface 99b closely faces the lower mating surface 95b with a slight mold clearance. The second mold 99 is guided by the shoulder portion 95 and slides in the mold closing direction. The upper molding surface 99a of the second mold 99 comes into contact with a surface layer of the compound of the resin material 50 before the second mold 99 reaches the bottom dead center. Fig. 6 shows this state. The second mold 99 is further driven by the drive unit 9a so as to move in the mold closing direction, and the compound of the resin material 50 is pressed in the mold closing direction. The compound is softened by the heat of the mold 90 and flows by being pressed by the molding pressure applied from the second mold 99.

Fig. 7 shows a bottom dead center state where the second mold 99 is located at the bottom dead center. In the bottom dead center state, the upper molding surface 99a and the lower molding surface 94a are separated from each other in the mold opening/closing direction. The lower mating surface 95b is a portion of the inner side surface of the shoulder portion 95 in the mold opening direction with respect to the upper molding surface 99a. The side molding surface 95a is a portion of the inner side surface of the shoulder portion 95 in the mold closing direction with respect to the upper molding surface 99a. The lower molding surface 94a, the side molding surface 95a, and the upper molding surface 99a define a cavity 90a. The cavity 90a is a space intended to be filled with the resin material 50.

Since the space between the second side wall 22 and the second inner side surface 92b is intended to be filled with the resin material 50, the space constitutes a part of the cavity 90a. The resin material 50 filled in this space covers the outer surface (covered surface 22a) of the second side wall 22 and constitutes the peripheral wall 52 (see Fig. 2). Meanwhile, the space between the first side wall 21 and the first inner side surface 92a is not intended to be filled with the resin material 50. The outer surface (exposed surface 21a) of the first side wall 21 is not covered with the resin material 50, and it is expected that the aluminum alloy is purely exposed at least in a state immediately after the mold release. The mold clearance between the lower mating surface 95b and the upper mating surface 99b is not intended to be filled with the resin material 50.

When the resin material 50 is pressurized in the mold closing direction, the molding pressure of the second mold 99 is applied onto the outer surface 23a of the first outer connection wall 23 via the resin material 50.

In the present embodiment, the hook 29 is locked to the first mold 91. As a result, it is possible to maintain a state in which the extruded material 20 stands in the mold opening/closing direction in the housing portion 92 and to suppress falling toward the second inner side surface 92b. When the extruded material 20 stands in the housing portion 92, a space between the extruded material 20 and the tapered surface 94c is appropriately ensured to be wide. Therefore, the resin material 50 easily flows from a region above the lower molding surface 94a into the space between the second side wall 22 and the second inner side surface 92b. Since the flow path resistance of the filling path becomes low, it is also possible to suppress the inflow of the resin material 50 into a small clearance (for example, a mold clearance) not intended to be filled with the resin.

The resin material 50 flows in the mold closing direction in the space between the second side wall 22 and the second inner side surface 92b. As a result, the molding pressure of the second mold 99 is applied onto the outer surface (covered surface 22a) of the second side wall 22 via the resin material 50 on the one side in the width direction. As a result, the extruded material 20 is pushed toward the first inner side surface 92a.

In this manner, since the second side wall 22 is pushed toward the first inner side surface 92a, the outer surface (exposed surface 21a) of the first side wall 21 is brought into close contact with the first inner side surface 92a of the housing portion 92. A space between the first side wall 21 and the first inner side surface 92a is closed. It is possible to suppress an unintended inflow of the resin material 50, and the exposed surface 21a of the first side wall 21 is not covered with the resin material 50.

When the resin material 50 flows into the space between the second side wall 22 and the second inner side surface 92b, a space communicating with this space is further filled with the resin material 50. The resin material 50 covers a periphery of the lower end portion of the second side wall 22, and is filled in a space surrounded by the offset portion 24c and the step portion 24b.

Since the groove 94b is opened toward the mold opening direction, the groove 94b functions as a part of the cavity 90a, and the resin material 50 is filled in the groove 94b and covers a periphery of the hook 29. Further, a periphery of the metal nut as the joining member 41 is filled with the resin material 50. That is, the joining member 41 is integrated with the resin material 50.

While the groove 94b functions as the part of the cavity 90a, a space between the exposed surface 21a and the first inner side surface 92a is not intended for the resin material 50 to flow into. The two may communicate through a space between the hook 29 and the base 94. However, since the space has a maze-like shape due to the fitting between the hook 29 and the base 94, the resin material 50 is less likely to enter from the groove 94b. Moreover, the hook 29 is pushed in the mold closing direction by the molding pressure applied to the first outer connection wall 23. As a result, the bent portion 29b of the hook 29 is pressed against the inner surface of the slit 94d, and the protrusion 29a of the hook 29 is pressed against the inner bottom surface of the groove 94b. Therefore, the space between the hook 29 and the base 94 is closed, and the resin material in the groove 94b can be prevented from entering between the exposed surface 21a and the first inner side surface 92a.

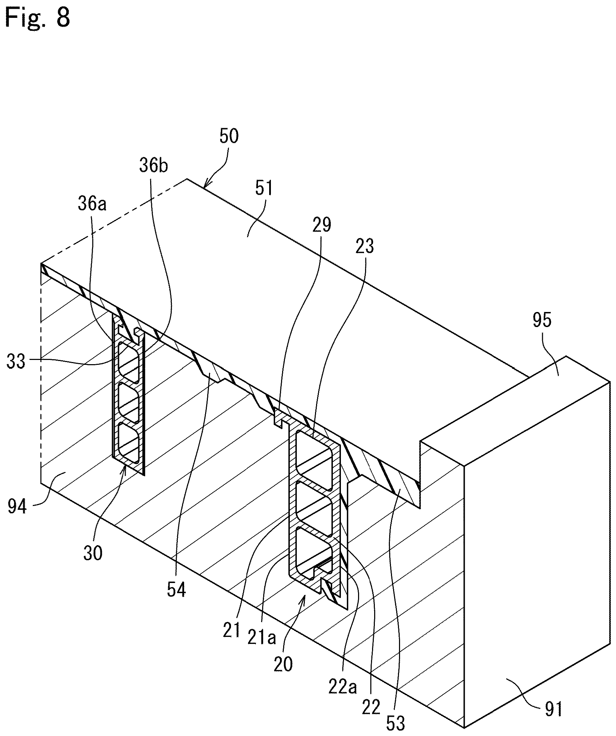

When a predetermined period elapses in a state where the second mold 99 is positioned at the bottom dead center, the resin material 50 is cured. After the resin material 50 is cured, the drive unit 9a moves the second mold 99 to the retraction position in the mold opening direction. As a result, as shown in Fig. 8, the metal-resin composite 100 remains in the first mold 91. Then, the metal-resin composite 100 is taken out from the first mold 91.

After the metal-resin composite 100 is mold released, the metal-resin composite 100 is used upside down as necessary as shown in Figs. 2 and 3.

In the metal-resin composite 100 manufactured as described above, the extruded material 20 has the hook 29 protruding from the end portion of the exposed surface 21a of the first side wall 21. Then, as illustrated in the example of the manufacturing method, the first side wall 21 of the extruded material 20 is brought into close contact with the first inner side surface 92a of the housing portion 92 using the hook 29, and the standing orientation of the extruded material 20 can be maintained. As a result, it is possible to prevent the resin material 50 from solidifying on the exposed surface 21a on which the aluminum alloy is to be exposed at least immediately after the mold release. Therefore, an operation of peeling off an excess resin material after the mold release can be omitted or greatly simplified, and the production efficiency of the metal-resin composite 100 is improved.

In a case where the extruded materials 20 and 30 are integrally molded with the resin material 50, it is considered desirable that the housing portions 92 and 93 be designed such that a clearance between the extruded materials 20 and 30 and the inner surfaces of the housing portions 92 and 93 is correspondingly large because of the low dimensional accuracy of the extruded materials 20 and 30. This clearance may cause the operation of peeling off the excess resin material. In the present embodiment, the outer side surface of the second side wall 22 functions as the covered surface 22a to which the resin material 50 is intentionally fixed. As a result, it becomes easy to properly place the extruded material 20 in the mold 90, the occurrence of the operation of peeling off the excess resin material 50 is suppressed, and the joint strength between the extruded materials 20 and 30 via the resin material 50 is improved. By improving the joint strength, welding and fastening can be omitted or reduced, and the production efficiency of the metal-resin composite 100 is further improved.

The first mold 91 has the groove 94b defined by the hook 29 and constituting the part of the cavity 90a. When the resin material 50 flowing into the groove 94b is solidified, the resin material 50 is thickly disposed around the hook 29. When the resin material 50 is banked, the strength of the metal-resin composite 100 is improved, and the resin material 50 is hardly peeled off from the extruded material 20.

The extruded material 20 and the resin material 50 form a fitting structure at an end portion of the second side wall 22 in the mold closing direction. In this regard, in the present embodiment, the extruded material 20 has a complicated uneven shape at the corner portion between the second side wall 22 and the second outer connection wall 24. The resin material 50 is filled around a portion forming the uneven shape via the space between the covered surface 22a and the second inner side surface 92b. As a result, the fitting structure is formed. As a result, the extruded material 20 and the resin material 50 are caulked and joined to each other, and the resin material 50 is hardly peeled off from the extruded material 20.

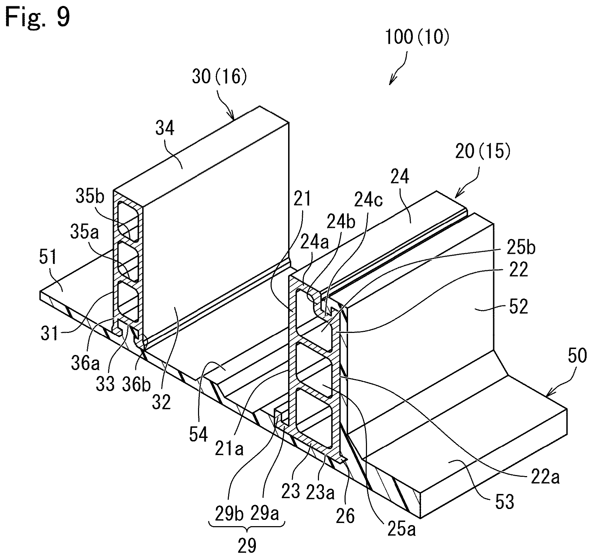

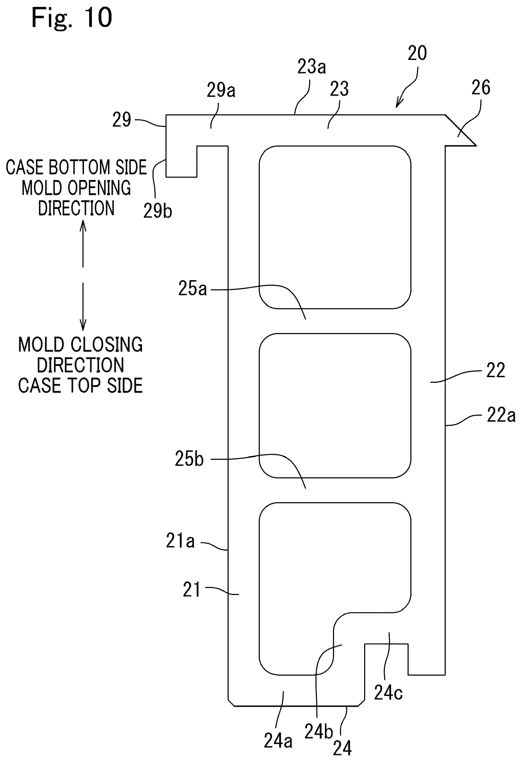

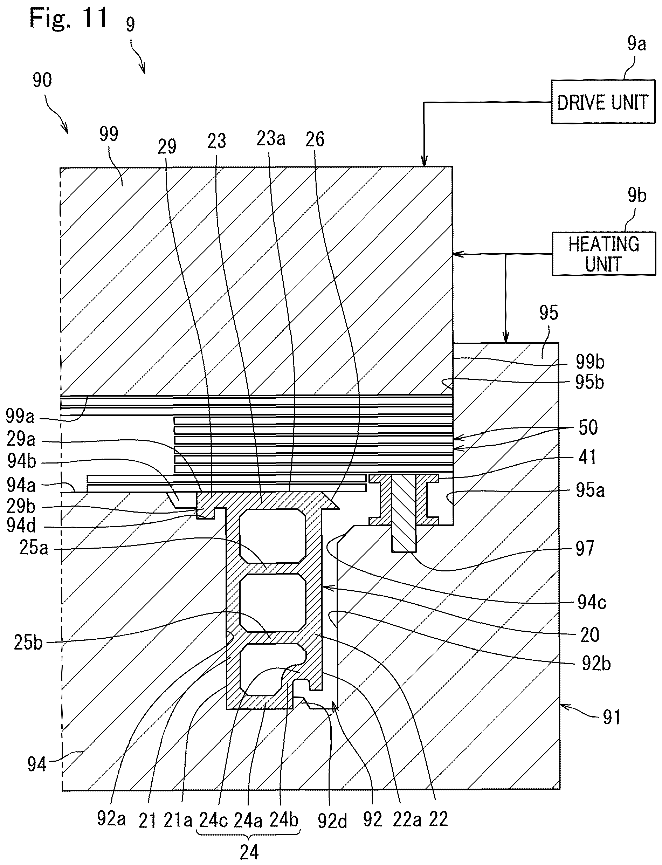

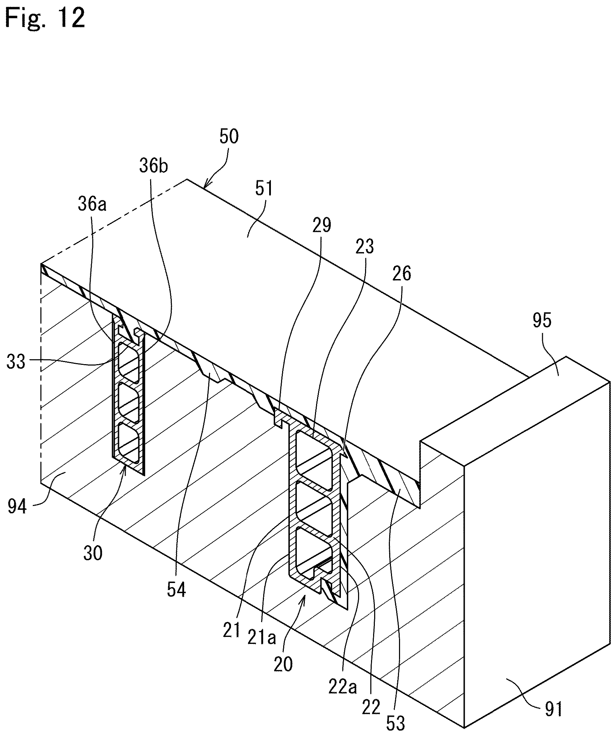

Next, a second embodiment will be described focusing on differences from the first embodiment with reference to Figs. 9 to 12.

In the extruded material 20 according to the present embodiment, the first outer connection wall 23 is extended to the other side in the width direction with respect to the second side wall 22. Due to this extension, a projection 26 protruding to the other side in the width direction is disposed at a corner portion between the first outer connection wall 23 and the second side wall 22. An end surface of the projection 26 is inclined toward the other side in the width direction as the end surface extends toward the mold closing direction.

As in the first embodiment, the upper edge of the second inner side surface 92b is relatively low, and the tapered surface 94c is disposed. Therefore, in the housing state where the extruded material 20 is housed, the projection 26 does not interfere with the second inner side surface 92b or does not interfere with the lower molding surface 94a. The space between the outer side surface (covered surface 22a) of the second side wall 22 and the second inner side surface 92b is widely opened toward the mold opening direction through a clearance between the tapered surface 94c and the projection 26. When the resin material 50 is pressurized, the resin material 50 covers a periphery of the projection 26 in a process in which the resin material 50 flows into the space between the second side wall 22 and the second inner side surface 92b. When the molding pressure is applied to an inclined surface of the projection 26, the extruded material 20 is pushed toward the first inner side surface 92a by the action of a wedge. As a result, the clearance between the exposed surface 21a and the first inner side surface 92a is further easily closed.

The resin material 50 is solidified around the projection 26, and the extruded material 20 is caulked and joined to the resin material 50. Therefore, the resin material 50 is more hardly peeled off from the extruded material 20.

Although the embodiments of the present invention have been described so far, addition, removal, or a change can be made to the above-described configurations within the scope of the gist of the present invention.

In the above-described embodiment, the projection 26 is formed by extending the first outer connection wall 23 to the other side in the width direction, and protrudes from the second side wall 22. The projection may be formed by an extension of another wall or may protrude from another wall. For example, the projection may be formed by extending the first side wall 21 or the second side wall 22 in the mold opening direction. The projection 26 may be formed by extending the first outer connection wall 23 to the one side in the width direction, and may protrude from the first side wall 21. Conversely, the projection may be omitted. The fitting structure may be omitted.

The metal-resin composite 100 is also applicable to vehicle structural members other than the battery case 10. The metal-resin composite 100 is also applicable to structural members used for applications other than vehicles.

The present disclosure may include the following aspects.

### (Aspect 1)

A method for manufacturing a metal-resin composite in which a resin material is integrated with an extruded material made of metal by press molding, the method comprising:
preparing a mold including a first mold that forms a housing portion that houses at least a portion of the extruded material, and a second mold movable in a mold closing direction and a mold opening direction with respect to the first mold;
housing the extruded material in the housing portion and disposing the resin material in the first mold; and
moving the second mold in the mold closing direction to form a cavity defined by the extruded material and the mold, and pressurizing the resin material to fill the resin material into the cavity,
wherein the extruded material includes
   a first side wall that forms an exposed surface on which the metal is exposed, and that is to closely face a first inner side surface of the housing portion in a housing state where the extruded material is housed in the housing portion,
   a second side wall that forms a covered surface covered with the resin material and defines the cavity together with a second inner side surface of the housing portion in the housing state, and
   a hook that protrudes from an end portion of the first side wall in the mold opening direction and is locked to the first mold in the housing state.

### (Aspect 2)

The method for manufacturing a metal-resin composite according to Aspect 1, wherein the first mold forms a groove defined by an end portion of an outer surface of the hook and constituting a part of the cavity.

### (Aspect 3)

The method for manufacturing a metal-resin composite according to Aspect 1 or 2, wherein the extruded material and the resin material constitute a fitting structure at an end portion of the second side wall in the mold closing direction.

### (Aspect 4)

The method for manufacturing a metal-resin composite according to any one of Aspects 1 to 3, wherein
the extruded material further includes
an outer connection wall that connects end portions of the first side wall and the second side wall in the mold opening direction in the housing state, and
a projection protruding with respect to the covered surface at a corner portion between the outer connection wall and the second side wall.

### (Aspect 5)

A metal-resin composite obtained by integrating a resin material with an extruded material made of metal by press molding, wherein
the extruded material includes
a first side wall that forms an exposed surface on which the metal is exposed,
a second side wall that forms a covered surface covered with the resin material, and
a hook that protrudes from an end portion of the exposed surface of the first side wall.

This application claims benefit of priority based on to Japanese Patent Application No. 2023-123687 filed on July 28, 2023, the entire content of which is incorporated herein by reference.

### REFERENCE SIGNS LIST

- 1: automobile
- 2: battery
- 3: vehicle front portion
- 4: vehicle body central portion
- 5: vehicle interior
- 9: manufacturing device
- 9a: drive unit
- 9b: heating unit
- 10: battery case
- 11: frame
- 12, 13: side member
- 14: front member
- 15: rear member
- 16: cross member
- 20: extruded material
- 21: first side wall
- 21a: exposed surface
- 22: second side wall
- 22a: covered surface
- 23: first outer connection wall
- 23a: outer surface
- 24: second outer connection wall
- 24a: base portion
- 24b: step portion
- 24c: offset portion
- 25a, 25b: inner connection wall
- 26: projection
- 29: hook
- 29a: protrusion
- 29b: bent portion
- 30: extruded material
- 31: first side wall
- 32: second side wall
- 33: first outer connection wall
- 34: second outer connection wall
- 35a, 35b: inner connection wall
- 36a, 36b: extension side wall
- 41, 42: joining member
- 50: resin material
- 51: bottom wall
- 52: peripheral wall
- 53: flange wall
- 54: ridge portion
- 90: mold
- 90a: cavity
- 91: first mold
- 92: housing portion
- 92a: first inner side surface
- 92b: second inner side surface
- 92c: inner bottom surface
- 92d: ridge
- 93: housing portion
- 94: base
- 94a: lower molding surface
- 94b: groove
- 94c: tapered surface
- 94d: slit
- 95: shoulder portion
- 95a: side molding surface
- 95b: lower mating surface
- 97: cylindrical nest
- 99: second mold
- 99a: upper molding surface
- 99b: upper mating surface
- 100: metal-resin composite

## Claims

1. A method for manufacturing a metal-resin composite in which a resin material is integrated with an extruded material made of metal by press molding, the method comprising:
preparing a mold including a first mold that forms a housing portion that houses at least a portion of the extruded material, and a second mold movable in a mold closing direction and a mold opening direction with respect to the first mold;
housing the extruded material in the housing portion and disposing the resin material in the first mold; and
moving the second mold in the mold closing direction to form a cavity defined by the extruded material and the mold, and pressurizing the resin material to fill the resin material into the cavity,
wherein the extruded material includes
a first side wall that forms an exposed surface on which the metal is exposed, and that is to closely face a first inner side surface of the housing portion in a housing state where the extruded material is housed in the housing portion,
a second side wall that forms a covered surface covered with the resin material and defines the cavity together with a second inner side surface of the housing portion in the housing state, and
a hook that protrudes from an end portion of the first side wall in the mold opening direction and is locked to the first mold in the housing state.

2. The method for manufacturing a metal-resin composite according to claim 1, wherein the first mold forms a groove defined by an end portion of an outer surface of the hook and constituting a part of the cavity.

3. The method for manufacturing a metal-resin composite according to claim 1 or 2, wherein the extruded material and the resin material constitute a fitting structure at an end portion of the second side wall in the mold closing direction.

4. The method for manufacturing a metal-resin composite according to claim 1 or 2, wherein
the extruded material further includes
an outer connection wall that connects end portions of the first side wall and the second side wall in the mold opening direction in the housing state, and
a projection protruding with respect to the covered surface at a corner portion between the outer connection wall and the second side wall.

5. A metal-resin composite obtained by integrating a resin material with an extruded material made of metal by press molding, wherein
the extruded material includes
a first side wall that forms an exposed surface on which the metal is exposed,
a second side wall that forms a covered surface covered with the resin material, and
a hook that protrudes from an end portion of the exposed surface of the first side wall.
